# EUROPÄISCHE PATENTSCHRIFT

(11) **EP 3 331 716 B1**
(45) Veröffentlichungstag und Bekanntmachung des Hinweises auf die Patenterteilung: **27.11.2019**
(21) Anmeldenummer: 15788344.8
(22) Anmeldetag: 16.10.2015
(51) Int. Cl.: B60J 7/22, B29C 39/10, B29C 39/30, B29C 39/02

(54) **WINDABWEISER MIT BEFESTIGUNGSSYSTEM FÜR AUFSPANNBARES ABWEISERELEMENT**
WIND DEFLECTOR WITH A FASTENING SYSTEM FOR A STRETCHABLE DEFLECTOR ELEMENT
DÉFLECTEUR D'AIR PRÉSENTANT UN SYSTÈME DE FIXATION POUR UN ÉLÉMENT DÉFLECTEUR ÉTIRABLE

(30) Priorität: 07.08.2015 DE 102015113079
(43) Veröffentlichungstag der Anmeldung: 13.06.2018
(73) Patentinhaber: Webasto SE, 82131 Stockdorf (DE)
(72) Erfinder: WIMMER, Rudolf, 82131 Stockdorf (DE); PRADELLA, Moritz, 82131 Stockdorf (DE)
(74) Vertreter: advotec.
(86) Internationale Anmeldenummer: PCT/EP2015/073992
(87) Internationale Veröffentlichungsnummer: WO 2017/025153

(56) Entgegenhaltungen:
- CN-U- 203 623 343
- DE-A1-102009 021 150
- DE-A1-102010 048 964

## Beschreibung

Die Erfindung betrifft einen Windabweiser für ein öffenbares Fahrzeugdach mit einem verschiebbaren Deckelelement mit den Merkmalen des Oberbegriffs des Patentanspruches 1.

Ein derartiger Windabweiser ist aus der Praxis bekannt und im Bereich eines vorderen Randes einer Dachöffnung angeordnet, die mittels eines Deckelelements wahlweise verschließbar oder zumindest teilweise freigebbar ist. Als Abweiserelement kann der Windabweiser ein aufspannbares Netz umfassen, das an seinem unteren Rand über eine untere Randleiste an einer fahrzeugfesten Basis, d.h. dachfest, angebunden ist und an seinem oberen Rand über eine obere Randleiste an einen Ausstellbügel angebunden ist. Der Ausstellbügel ist in der Regel U-förmig ausgebildet und mit seinen freien Schenkeln, die jeweils einen Ausstellarm bilden, im Bereich einer jeweiligen dachfesten Führungsschiene für das Deckelelement schwenkbar angelenkt. In Abhängigkeit von der Öffnungsstellung des Deckelelements ist der Ausstellbügel zwischen einer niedergedrückten Ruhestellung, in der das Abweiserelement gefaltet ist, und einer ausgestellten Betriebsstellung, in der das Abweiserelement aufgespannt ist und eine Anströmfläche bildet, verschwenkbar. Die untere Randleiste ist kederartig ausgebildet und greift in einen Kederkanal der fahrzeugfesten Basis ein. Die obere Randleiste kann ebenfalls kederartig ausgebildet sein und in einen korrespondierenden Kederkanal des Ausstellbügels eingreifen. Die untere Randleiste und die fahrzeugfeste Basis einerseits und die obere Randleiste und der Ausstellbügel andererseits bilden damit jeweils ein Befestigungssystem für das Abweiserelement. DE 10 2010 048 964 A1 offenbart einen Windabweiser gemäß dem Oberbegriff von Anspruch 1. Bei dem vorstehend beschriebenen bekannten Windabweiser besteht der Nachteil, dass insbesondere im Bereich der fahrzeugfesten Basis eine Befestigungsgeometrie erforderlich ist, die die kederartige untere Randleiste des Abweiserelements beidseits umgreift, was einen hinreichenden Bauraum in Fahrzeuglängsrichtung und gegebenenfalls in Fahrzeugquerrichtung erforderlich macht. Dieser Bauraum geht wiederum zu Lasten der maximalen Größe des von dem Deckelelement verschließbaren Dachausschnitts und damit des realisierbaren Dachdurchsichtsbereichs. Des Weiteren gestaltet sich die Herstellung des Kederkanals mit entsprechenden Hinterhakungen als aufwändig, da ein zur Herstellung der fahrzeugfesten Basis eingesetztes Spritzgusswerkzeug mit entsprechenden Schiebern versehen sein muss, welche das Werkzeug zudem teuer machen.

Der Erfindung liegt die Aufgabe zugrunde, einen Windabweiser der einleitend genannten Gattung mit einem wenig Bauraum erfordernden Befestigungssystem zur Anbindung des Abweiserelements an eine fahrzeugfeste Basis und/oder einen verschwenkbaren Ausstellbügel des Windabweisers zu schaffen.

Diese Aufgabe ist erfindungsgemäß durch den Windabweiser mit den Merkmalen des Patentanspruches 1 gelöst.

Gemäß der Erfindung wird also vorgeschlagen, das Befestigungssystem zur Anbindung des Abweiserelements an die fahrzeugfeste Basis und/oder an den Ausstellbügel aus einer Fixierrippe einerseits und Rast- und Stützlaschen andererseits zu bilden, die mit der Fixierrippe in Eingriff stehen, und zwar derart, dass in Längsrichtung der Rippe betrachtet abwechselnd von einander abgewandten Seiten eine Rastlasche und eine Stützlasche an der Fixierrippe zur Anlage gebracht werden. Zumindest die Rastlaschen sind an der Fixierrippe verrastet. Die Stützlaschen, die gegebenenfalls ebenso an der Fixierrippe verrastet sein können, liegen von der den Rastlaschen abgewandten Seite an der Fixierrippe an. Die Fixierrippe kann sehr schmal ausgeführt sein und trotzdem eine hinreichende Stabilität aufweisen, so dass zur Realisierung des Befestigungssystems aus der Fixierrippe und der Laschenanordnung nur ein geringer Bauraum erforderlich ist. Dies ermöglicht es, den angrenzenden Dachausschnitt und somit den Durchsichtsbereich des Daches entsprechend groß auszubilden.

Bei einer bevorzugten Ausführungsform des Windabweisers nach der Erfindung ist die Fixierrippe an der fahrzeugfesten Basis und die Laschenanordnung an der unteren Randleiste des Abweiserelements angeordnet. Die fahrzeugfeste Basis ist beispielsweise ein Rahmenvorderteil eines Schiebedachrahmens oder auch eine separate Windabweiserwanne, die in dem betreffenden Fahrzeugdach integriert ist. Bei der Montage eines entsprechend ausgebildeten Windabweisers wird die die Laschenanordnung tragende untere Randleiste des aufspannbaren Abweiserelements von oben auf die Fixierrippe der fahrzeugfesten Basis gesteckt, wobei die Rastlaschen sich an einer Seite der Fixierrippe verhaken und die Stützlaschen an der anderen Seite der Fixierrippe zur Anlage kommen und so ein Gegenlager für die Randleiste bilden.

Bei einer alternativen Ausführungsform des Windabweisers nach der Erfindung ist die untere Randleiste des Abweiserelements mit einer Fixierrippe versehen, wobei dann die Laschenanordnung an der fahrzeugfesten Basis angeordnet ist. In diesem Falle wird bei der Montage die untere Randleiste zwischen die Rastlaschen und die Stützlaschen der Laschenanordnung der fahrzeugfesten Basis geschoben und verrastet.

Um die betreffende Randleiste des Abweiserelements ausziehsicher mit dem Ausstellbügel bzw. der fahrzeugfesten Basis verbinden zu können, weisen die Rastlaschen bei einer speziellen Ausführungsform des Windabweisers nach der Erfindung jeweils eine Rastnase auf, die in eine jeweilige korrespondierende Rastöffnung der Fixierrippe eingreift. Die Rastöffnung kann eine Ausnehmung der Fixierrippe sein oder auch in Form eines Hinterschnitts ausgebildet sein, in den eine hakenartig ausgebildete Rastnase der betreffenden Rastlasche eingreift.

Bei einer alternativen Ausführungsform des Windabweisers nach der Erfindung sind die Rastlaschen jeweils mit einer Rastöffnung versehen, in die eine jeweilige korrespondierende Rastnase der Fixierrippe eingreift. Auch bei dieser Ausführungsform ist das Abweiserelement ausziehsicher mit der fahrzeugfesten Basis verbunden.

Damit das aus der Fixierrippe und der Laschenanordnung gebildete Befestigungssystem besonders wenig Bauraum erfordert, weist die Fixierrippe bei einer bevorzugten Ausführungsform des Windabweisers nach der Erfindung in ihrer Längsrichtung in alternierender Weise Aufnahmen für die Rastlaschen und die Stützlaschen auf. Die Rastlaschen und die Stützlaschen haben dann beispielsweise eine Stärke, die der Dicke bzw. der Stärke der Fixierrippe entspricht. Die Tiefe der Aufnahmen kann der Stärke der Rastlaschen bzw. der Stützlaschen entsprechen. Die Gesamtdicke des Befestigungssystems ist dann durch die Stärke der Fixierrippe vorgegeben. Die Breite der Randleiste, die mit der Laschenanordnung versehen ist, kann entsprechend ausgebildet sein.

Um die Stabilität des Befestigungssystems weiter zu erhöhen, können auch die Stützlaschen jeweils mit einer Rasteinrichtung versehen sein, die mit einem korrespondierenden Rastelement der Fixierrippe zusammenwirkt.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Windabweisers nach der Erfindung sind in der Zeichnung schematisch vereinfacht dargestellt und werden in der nachfolgenden Beschreibung näher erläutert. Es zeigt:
- Fig. 1: eine perspektivische Draufsicht auf ein Fahrzeugdach mit einem Windabweiser nach der Erfindung;
- Fig. 2: eine schematische Seitenansicht des Windabweisers;
- Fig. 3: eine perspektivische Darstellung einer Windabweiserwanne mit einem an dieser befestigten Windabweisernetz;
- Fig. 4: die Windabweiserwanne in Alleinstellung;
- Fig. 5: das Windabweisernetz in Alleinstellung;
- Fig. 6: eine vergrößerte Darstellung eines Anbindungsbereichs des Windabweisernetzes an die Windabweiserwanne;
- Fig. 7: einen ersten Schnitt durch den Windabweiser entlang der Linie VII-VII in Fig. 3;
- Fig. 8: einen zweiten Schnitt durch den Windabweiser entlang der Linie VIII-VIII in Fig. 3;
- Fig. 9: einen Längsschnitt durch die Windabweiserwanne und eine untere Randleiste des Windabweisernetzes gemäß der Linie IX-IX in Fig. 3;
- Fig. 10: eine perspektivische Ansicht einer alternativen Ausführungsform eines Windabweisernetzes, das an einer Windabweiserwanne befestigt ist;
- Fig. 11: die Windabweiserwanne der alternativen Ausführungsform;
- Fig. 12: das Windabweisernetz der alternativen Ausführungsform;
- Fig. 13: eine Vorderansicht auf die Windabweiserwanne und das Windabweisernetz;
- Fig. 14: einen Schnitt durch das Windabweisernetz und die Windabweiserwanne entlang der Linie XIV-XIV in Fig. 13;
- Fig. 15: eine vergrößerte Darstellung des Bereichs XV in Fig. 13; und
- Fig. 16: einen Schnitt durch das Windabweisernetz und die Windabweiserwanne entlang der Linie XVI-XVI in Fig. 13.

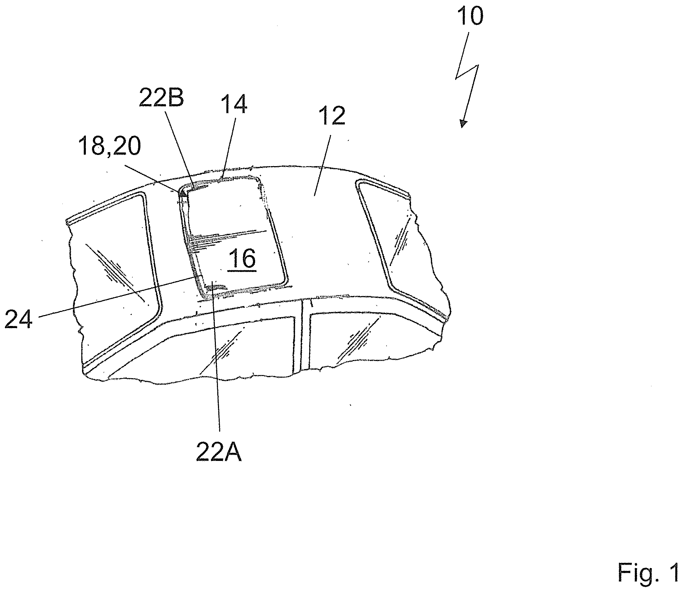

In Fig. 1 ist ein Kraftfahrzeug 10 dargestellt, welches ein Fahrzeugdach 12 aufweist, das mit einem Dachausschnitt 14 versehen ist, der mittels eines verschiebbaren Deckelelements 16 wahlweise verschlossen oder zumindest freigegeben werden kann.

Angrenzend an einen vorderen bzw. bugseitigen Randbereich des Dachausschnitts 14 ist ein in Abhängigkeit von der Stellung des Deckelelements 16 ausstellbarer Windabweiser 18 angeordnet, der sich im Wesentlichen in Fahrzeugquerrichtung erstreckt und nachfolgend näher beschrieben wird. Der Windabweiser 18 dient dazu, die Entstehung etwaig störender Luftströmungen und Luftverwirbelungen im Fahrzeuginnenraum bei geöffnetem Dachausschnitt 14, d.h. bei zurückgefahrenem Deckelelement 16, zu verhindern.

Der Windabweiser 18 umfasst einen zumindest annähernd U-förmigen Ausstellbügel 20, der zwei als Ausstellarme dienende Schenkel 22A und 22B aufweist, die über einen sich in Fahrzeugquerrichtung erstreckenden Querschenkel 24 miteinander verbunden sind. Die Ausstellarme 22A und 22B sind jeweils im Bereich einer sich in Fahrzeuglängsrichtung erstreckenden, hier nicht näher dargestellten Führungsschiene für das insbesondere aus transparentem Glas gefertigte Deckelelement 16 schwenkbar an das Fahrzeugdach 12 angelenkt und jeweils beispielsweise mittels einer Ausstellfeder in Ausstellrichtung vorgespannt. Der Ausstellgrad der Ausstellarme 22A und 22B und damit des Ausstellbügels 20 wird durch die Position des Deckelelements 16 in Fahrzeuglängsrichtung bestimmt. Das Deckelelement 16 fährt nämlich beim Schließen des Dachausschnitts 14 ausgehend von einer Öffnungs- bzw. Freigabestellung von hinten auf die Ausstellarme 22A und 22B auf und drückt diese gegen die Kraft der Ausstellfedern nach unten, d.h. in eine Ruhestellung. Beim Zurückfahren des Deckelelements bzw. Freigeben des Dachausschnitts 14 werden die Ausstellarme 22A und 22B freigegeben, so dass der Ausstellbügel 20 durch die Wirkung der Ausstellfedern selbsttätig in eine Wirkstellung ausschwenken kann.

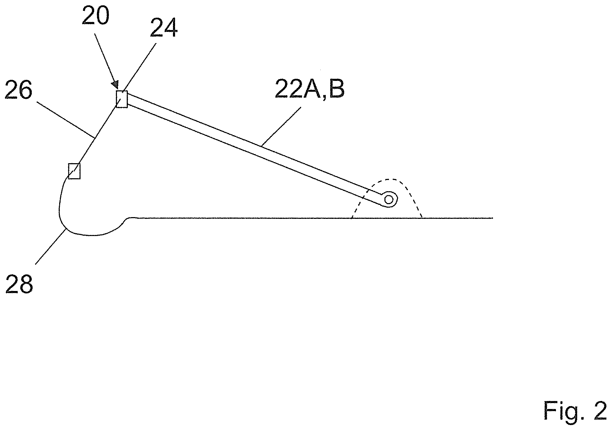

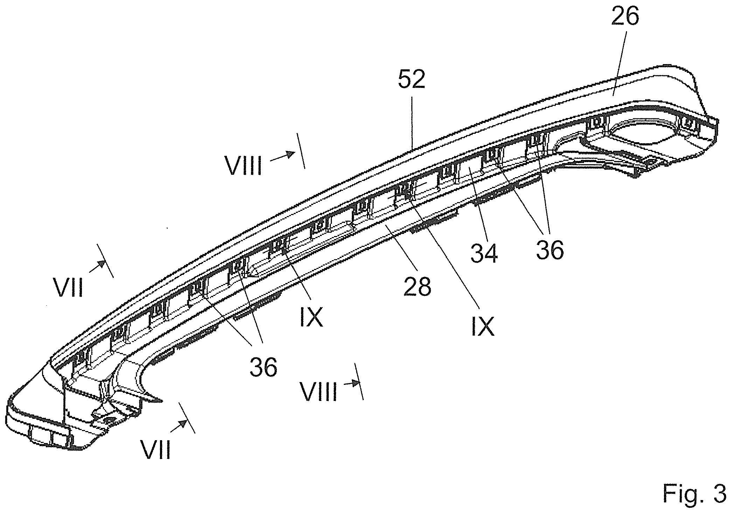

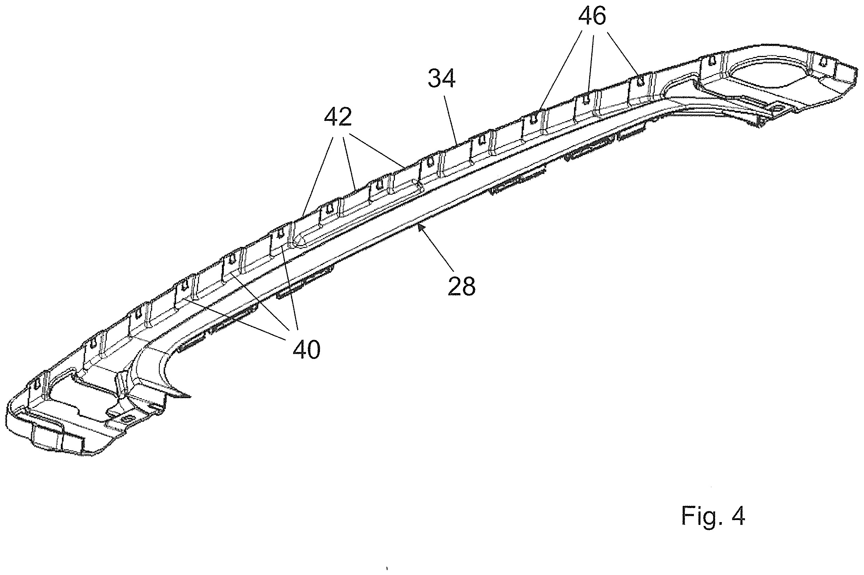

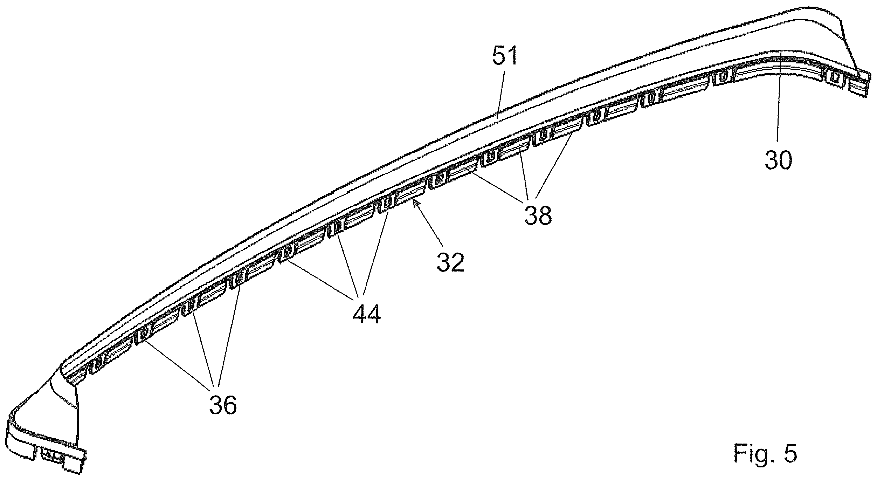

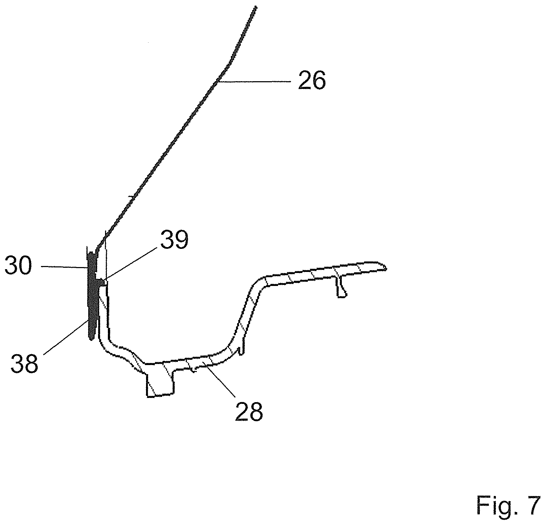

Wie den Figuren 2 bis 9 zu entnehmen ist, weist der Windabweiser 18 ein Abweiserelement 26 auf, das aus einem Gewebe oder Netz besteht und mithin aus einem flächigen, flexiblen und aufspannbaren Material gebildet ist. Das Abweiserelement 26 ist zwischen dem Ausstellbügel 20 und einem festen Dachabschnitt eingespannt, welcher eine fahrzeugfeste Basis des Windabweisers ist und von einer separaten Windabweiserwanne 28 gebildet ist. Das als Netz oder Gewebe ausgebildete Abweiserelement 26 ist im ausgestellten Zustand des Ausstellbügels 20 zwischen dem Ausstellbügel 20 und der Windabweiserwanne 28 aufgespannt. Im abgesenkten Zustand des Ausstellbügels 20 ist das Abweiserelement 26 in gefalteter Form zwischen dem abgesenkten Ausstellbügel 20 und der Windabweiserwanne 28 angeordnet.

Alternativ kann die fahrzeugfeste Basis des Windabweisers 18 auch von einem Rahmenvorderteil eines Schiebedachrahmens oder von einem sonstigen dachfesten Element des Fahrzeugdachs 12 gebildet sein.

Das aus einem feinmaschigen Kunststoffnetz gebildete Abweiserelement 26 weist eine untere Randleiste 30 auf, die mit einer Laschenanordnung 32 versehen ist, welche zusammen mit einer Fixierrippe 34 der Windabweiserwanne 28 ein Befestigungssystem zur Anbindung des Abweiserelements 26 an die Windabweiserwanne 28 bildet. Die Laschenanordnung 32 besteht aus Rastlaschen 36 und Stützlaschen 38, die entlang der nach einem Kunststoffspritzgießverfahren hergestellten Randleiste 30 in alternierender Weise, d.h. abwechselnd ausgebildet sind und in einstückiger Weise an der Randleiste 30 ausgebildet sind.

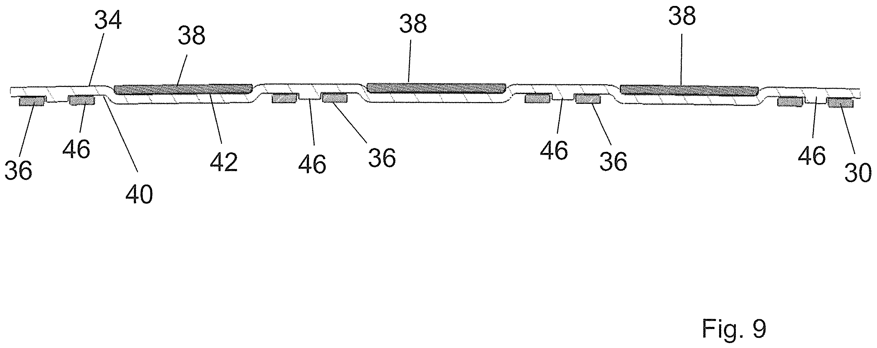

Die Fixierrippe 34 der Windabweiserwanne 28 weist in ihrer Längsrichtung in alternierender Weise Aufnahmen 40 für die Rastlaschen 36 und Aufnahmen 42 für die Stützlaschen 38 auf. Die Aufnahmen 40 und 42 sind dadurch realisiert, dass die Fixierrippe 34 jeweils im Übergang zwischen den Aufnahmen 40 und 42 gestuft ist, so dass die Fixierrippe 34 im Längsschnitt (Fig. 9) im weitesten Sinne der Form einer mathematischen Rechteckfunktion folgt bzw. eine Wellenform hat. Die Tiefe der Aufnahmen 40 und 42 entspricht der Stärke der Rastlaschen 36 und Stützlaschen 38.

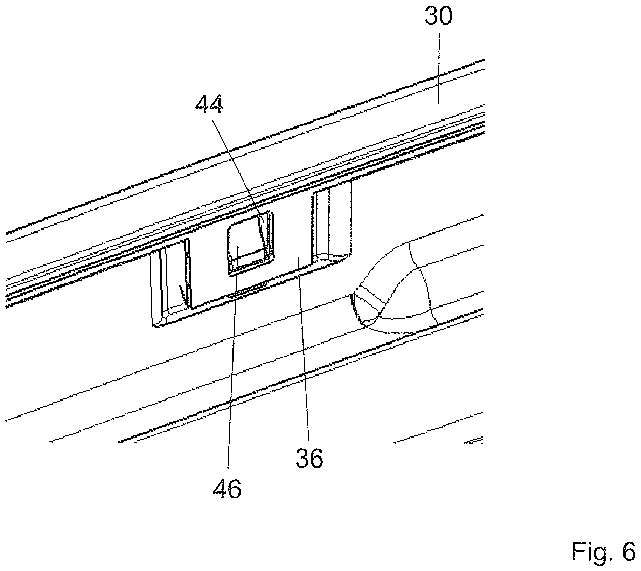

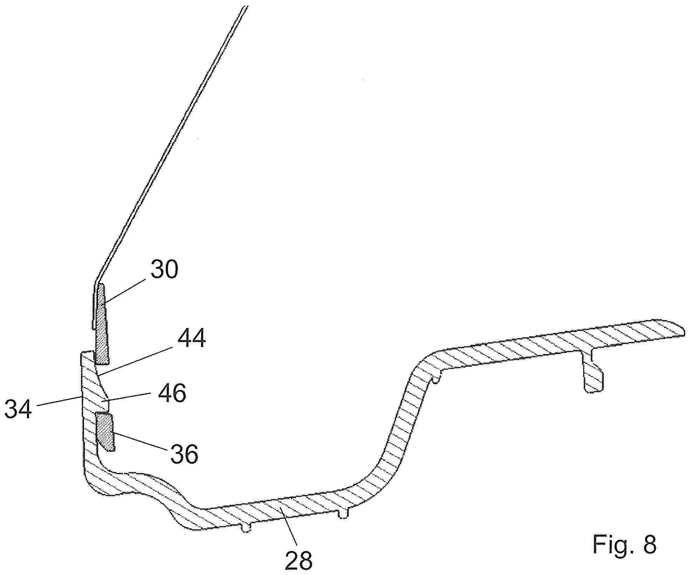

Um die Randleiste 30 an der Windabweiserwanne 28 fixieren zu können, weisen die Rastlaschen 36 jeweils eine fensterartige Rastöffnung 44 auf, in die eine jeweilige Rastnase 46 der Windabweiserwanne 28 eingreift, welche unten eine im Wesentlichen horizontal ausgebildete Rastfläche 48 aufweist und eine Einlaufschräge 50 hat, über die die jeweilige Rastlasche 36 in ihre in den Figuren 6 und 8 dargestellte Rastposition gleiten kann.

Die Stützlaschen 38, die in der montierten Stellung jeweils in den korrespondierenden Aufnahmen 42 der Windabweiserwanne 28 angeordnet sind, greifen von der den Rastlaschen 36 abgewandten Seite an der Fixierrippe 34 an. Von der einen Seite liegen also die Stützlaschen 38 an der Fixierrippe 34 an, wohingegen von der anderen Seite die Rastlaschen 36 an der Fixierrippe 34 der Windabweiserwanne 28 anliegen.

Um die Position der Randleiste 30 an der Fixierrippe 34 in vertikaler Richtung eindeutig zu bestimmen, weist die Randleiste 30 einen Anschlag 39 für die obere Stirnseite der Fixierrippe 34 auf.

Wie insbesondere aus Fig. 9 hervorgeht, ist die Dicke des aus der Laschenanordnung 32 und der Fixierrippe 34 gebildeten Befestigungssystems für das Abweiserelement 26 an der Windabweiserwanne 28 bestimmt durch die Materialstärke der Fixierrippe 34 und die Materialstärke der Rastlaschen 36 und der Stützlaschen 38, die von den Aufnahmen 40 und 42 aufgenommen sind, deren Tiefe der Materialstärke der Rastlaschen 36 und der Stützlaschen 38 entspricht.

Das Abweiserelement 26 weist des Weiteren eine obere Randleiste 51 auf, die kederartig ausgebildet ist und von einem Kederkanal des Ausstellbügels 20 aufgenommen ist.

Alternativ ist es aber auch denkbar, dass die obere Randleiste 51 zur Ausbildung eines Befestigungssystems ebenfalls mit einer Laschenanordnung versehen ist, die entsprechend der Laschenanordnung 32 der unteren Randleiste 30 ausgebildet ist und mit einer Fixierrippe zusammenwirkt, die an der Unterseite des Ausstellbügels 20 ausgebildet ist.

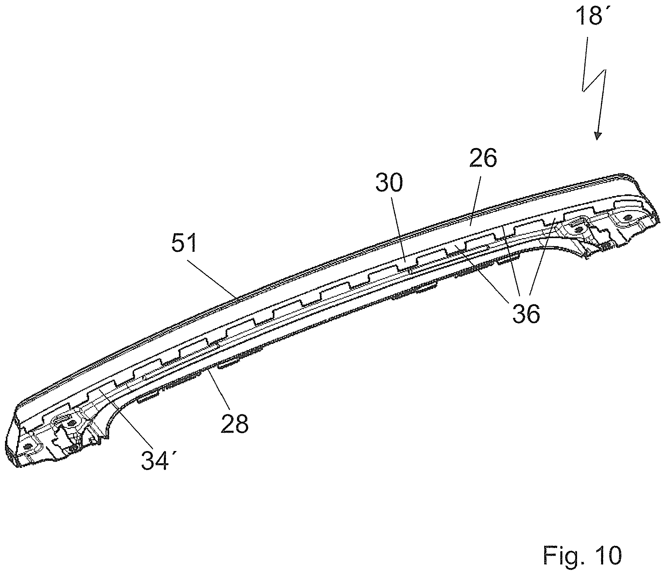

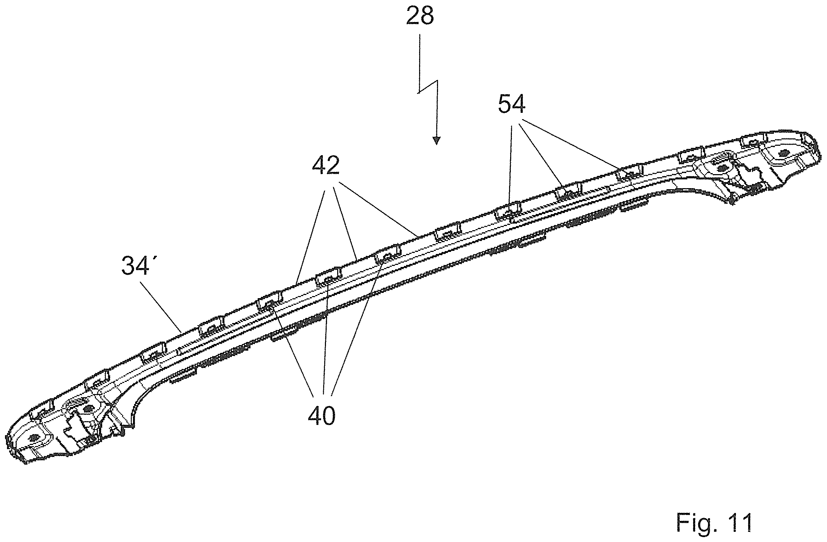

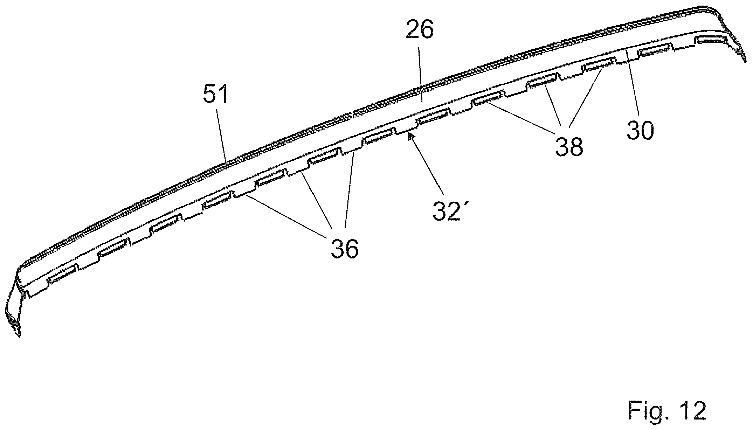

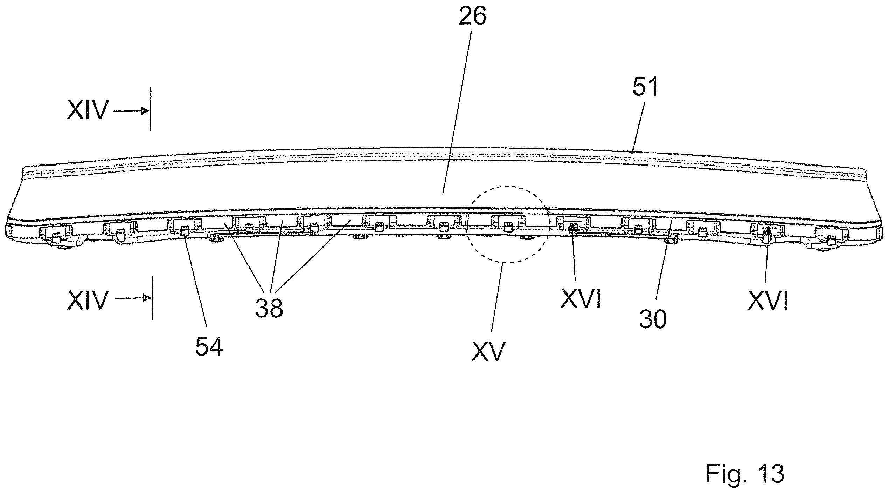

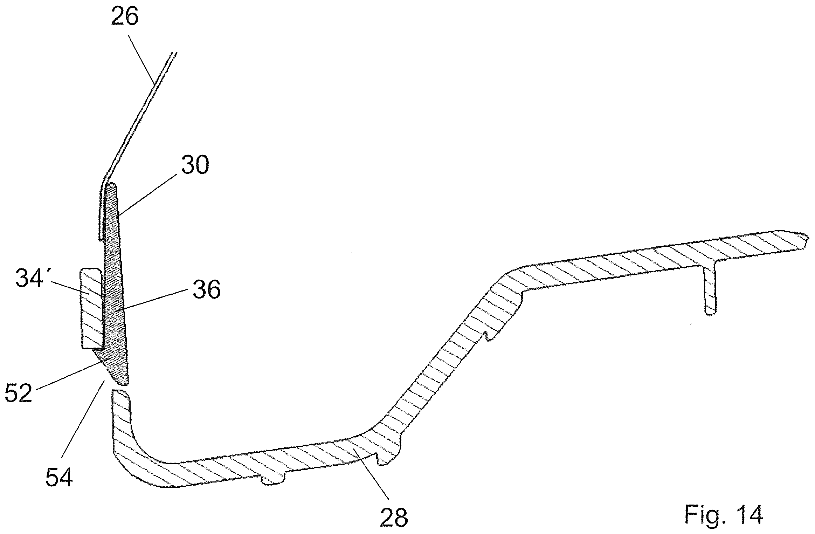

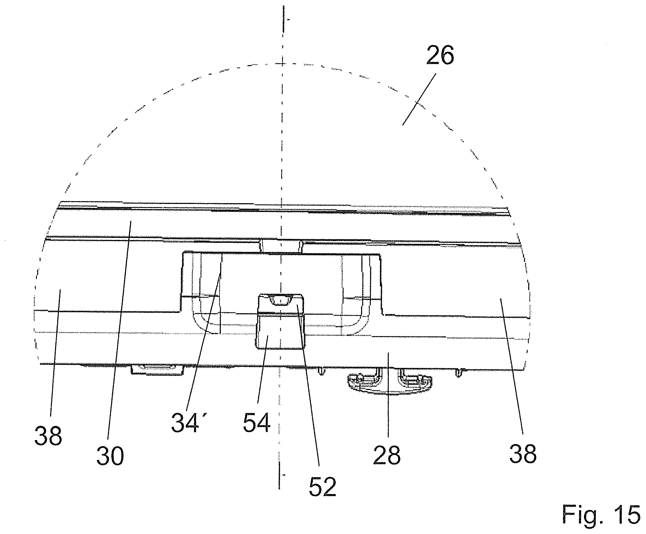

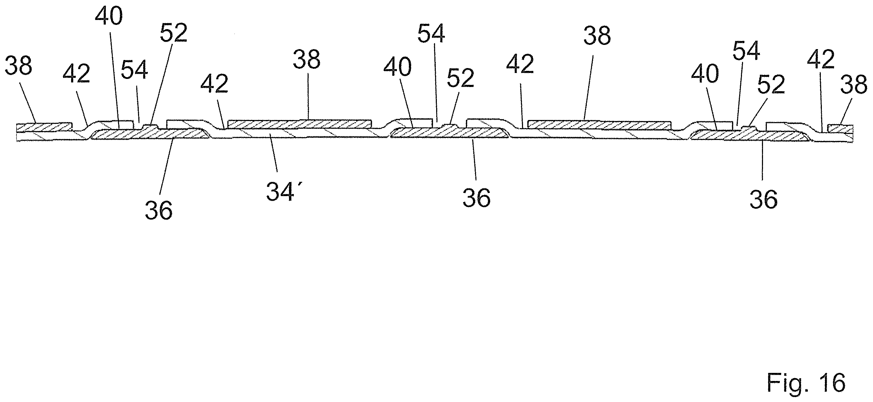

In den Figuren 10 bis 16 ist eine alternative Ausführungsform eines Windabweisers 18' dargestellt, der weitgehend dem vorstehend beschriebenen Windabweiser entspricht, sich jedoch von diesem dadurch unterscheidet, dass die untere Randleiste 30, die als Spritzgießelement ausgebildet ist, eine Laschenanordnung 32' aufweist, die Rastlaschen 36 umfasst, die an ihrer einer Fixierrippe 34' der Windabweiserwanne 28 zugewandten Seite Rastnasen 52 aufweisen, die in Rastöffnungen 54 eingreifen, die als fensterartige Ausschnitte im Bereich von Aufnahmen 42 für die Rastlaschen 36 an der Fixierrippe 34' ausgebildet sind.

Entsprechend der Ausführungsform nach den Figuren 1 bis 9 weist die Fixierrippe 34' ebenfalls in Längsrichtung abwechselnd Aufnahmen 40 und 42 für die abwechselnd ausgebildeten Rastlaschen 36 und Stützlaschen 38 des Abweiserelements 26 auf. Auch die Fixierrippe 34' hat einen Längsschnitt, welcher im weitesten Sinne der Form einer mathematischen Rechteckfunktion folgt.

Im Übrigen entspricht der Windabweiser 18' nach den Figuren 10 bis 16 dem in Zusammenhang mit den Figuren 1 bis 9 beschriebenen Windabweiser.

### Bezugszeichenliste

- 10: Kraftfahrzeug
- 12: Fahrzeugdach
- 14: Dachausschnitt
- 16: Deckelelement
- 18: Windabweiser
- 20: Ausstellbügel
- 22A, 22B: Schenkel bzw. Ausstellarme
- 24: Querschenkel
- 26: Abweiserelement
- 28: Windabweiserwanne
- 30: Randleiste
- 32: Laschenanordnung
- 34: Fixierrippe
- 36: Rastlasche
- 38: Stützlasche
- 39: Anschlag
- 40: Aufnahme
- 42: Aufnahme
- 44: Rastöffnung
- 46: Rastnase
- 48: Rastfläche
- 50: Einlaufschräge
- 51: Randleiste
- 52: Rastnase
- 54: Rastöffnung

## Patentansprüche

1. Windabweiser für ein öffenbares Fahrzeugdach mit einem verschiebbaren Deckelelement, umfassend ein aufspannbares Abweiserelement (26) aus einem flächigen, flexiblen Material, das an seinem unteren Randbereich über eine untere Randleiste (30) an einer fahrzeugfesten Basis und an seinem oberen Randbereich über eine obere Randleiste an einem verschwenkbaren Ausstellbügel (20) befestigt ist, wobei die untere Randleiste (30) und die fahrzeugfeste Basis und/oder die obere Randleiste und der Ausstellbügel ein jeweiliges Befestigungssystem bilden, **dadurch gekennzeichnet, dass** das Befestigungssystem einerseits eine Fixierrippe (34) und andererseits eine an der Fixierrippe (34, 34') festgelegte Laschenanordnung (32, 32') umfasst, die entlang der Fixierrippe (34, 34') in alternierender Weise aus Rastlaschen (36) und Stützlaschen (38) gebildet ist, wobei die Rastlaschen (36) und die Stützlaschen (38) von einander abgewandten Seiten an der Fixierrippe (34, 34') anliegen.

2. Windabweiser nach Anspruch 1, **dadurch gekennzeichnet, dass** die Fixierrippe (34, 34') an der fahrzeugfesten Basis und die Laschenanordnung (32, 32') an der unteren Randleiste (30) des Abweiserelements (26) angeordnet ist.

3. Windabweiser nach Anspruch 1, **dadurch gekennzeichnet, dass** die Fixierrippe an der unteren Randleiste des Abweiserelements und die Laschenanordnung an der fahrzeugfesten Basis angeordnet ist.

4. Windabweiser nach einem der Ansprüche 1 bis 3, **dadurch gekennzeichnet, dass** die Rastlaschen (36) jeweils eine Rastnase (52) aufweisen, die in eine jeweilige korrespondierende Rastöffnung (54) der Fixierrippe (34') eingreift.

5. Windabweiser nach einem der Ansprüche 1 bis 3, **dadurch gekennzeichnet, dass** die Rastlaschen (36) jeweils eine Rastöffnung (44) aufweisen, in die eine jeweilige korrespondierende Rastnase (46) der Fixierrippe (34) eingreift.

6. Windabweiser nach einem der Ansprüche 1 bis 5, **dadurch gekennzeichnet, dass** die Fixierrippe (34, 34') in ihrer Längsrichtung in alternierender Weise Aufnahmen (40, 42) für die Rastlaschen (36) und die Stützlaschen (38) aufweist.

7. Windabweiser nach einem der Ansprüche 1 bis 6, **dadurch gekennzeichnet, dass** die Stützlaschen jeweils mit einer Rasteinrichtung versehen sind, die mit einem korrespondierenden Rastelement der Fixierrippe zusammenwirkt.

## Claims

1. A wind deflector for a vehicle roof capable of being opened and having a displaceable cover element, comprising an unfoldable deflector element (26) made of a flat flexible material whose lower edge portion is fastened to a vehicle-mounted base via a lower edge strip (30) and whose upper edge portion is fastened to a pivotable deploying bow (20) via an upper edge strip, the lower edge strip (30) and the vehicle-mounted base and/or the upper edge strip and the deploying bow forming a respective fastening system, **characterized in that** the fastening system comprises a fixing rib (34) on the one hand and an arrangement of tabs (32, 32') attached to the fixing rib (34, 34') on the other hand, the arrangement of tabs being formed along the fixing rib (34, 34') by alternating latching tabs (36) and support tabs (38), the latching tabs (36) and the support tabs (38) being in contact with the fixing rib (34, 34') on sides facing away from each other.

2. The wind deflector according to claim 1, **characterized in that** the fixing rib (34, 34') is disposed on the vehicle-mounted base and the arrangement of tabs (32, 32') is disposed on the lower edge strip (30) of the deflector element (26).

3. The wind deflector according to claim 1, **characterized in that** the fixing rib is disposed on the lower edge strip of the deflector element and the arrangement of tabs is disposed on the vehicle-mounted base.

4. The wind deflector according to any one of claims 1 to 3, **characterized in that** each latching tab (36) has a latching nose (52) that engages into a respective corresponding latching opening (54) of the fixing rib (34').

5. The wind deflector according to any one of claims 1 to 3, **characterized in that** each latching tab (36) has a latching opening (44) that engages into a respective corresponding latching nose (46) of the fixing rib (34).

6. The wind deflector according to any one of claims 1 to 5, **characterized in that** the fixing rib (34, 34') has seats (40, 42) for the latching tabs (36) and for the support tabs (38) that alternate in the longitudinal direction of the fixing rib.

7. The wind deflector according to any one of claims 1 to 6, **characterized in that** each support tab is provided with a latching means that interacts with a corresponding latching element of the fixing rib.

## Revendications

1. Déflecteur de vent pour un toit de véhicule qui peut être ouvert ayant un élément de couverture déplaçable, comprenant un élément déflecteur (26) qui peut être tendu et est constitué d'un matériau plat et flexible dont le bord inférieur est attaché à une base fixée au véhicule via une bande de bord inférieure (30) et dont le bord supérieur est attaché à un étrier déployant (20) pivotant via une bande de bord supérieure, dans lequel la bande de bord inférieure (30) et la base fixée au véhicule et/ou la bande de bord supérieure et l'étrier déployant forment un respectif système de fixation, **caractérisé en ce que** le système de fixation comprend, d'une part, une nervure de fixation (34) et, d'autre part, un assemblage de pattes (32, 32') attaché à la nervure de fixation (34, 34'), l'assemblage de pattes étant formé le long de la nervure de fixation (34, 34') en alternant des pattes d'encliquetage (36) et des pattes de support (38), les pattes d'encliquetage (36) et les pattes de support (38) étant en contact avec la nervure de fixation (34, 34') sur des côtés opposés.

2. Déflecteur de vent selon la revendication 1, **caractérisé en ce que** la nervure de fixation (34, 34') est disposée à la base fixée au véhicule et l'assemblage de pattes (32, 32') est disposé à la bande de bord (30) inférieure de l'élément déflecteur (26).

3. Déflecteur de vent selon la revendication 1, **caractérisé en ce que** la nervure de fixation est disposée à la bande de bord inférieure de l'élément déflecteur et l'assemblage de pattes est disposé à la base fixée au véhicule.

4. Déflecteur de vent selon l'une quelconque des revendications 1 à 3, **caractérisé en ce que** chaque patte d'encliquetage (36) a un taquet d'encliquetage (52) qui vient en prise avec une respective ouverture d'encliquetage (54) correspondante de la nervure de fixation (34').

5. Déflecteur de vent selon l'une quelconque des revendications 1 à 3, **caractérisé en ce que** chaque patte d'encliquetage (36) a une ouverture d'encliquetage (44) qui vient en prise avec un respectif taquet d'encliquetage (46) correspondant de la nervure de fixation (34).

6. Déflecteur de vent selon l'une quelconque des revendications 1 à 5, **caractérisé en ce que** la nervure de fixation (34, 34') a des logements (40, 42) pour les pattes d'encliquetage (36) et les pattes de support (38) qui alternent dans la direction longitudinale de la nervure de fixation.

7. Déflecteur de vent selon l'une quelconque des revendications 1 à 6, **caractérisé en ce que** chaque patte de support est pourvu d'un moyen d'encliquetage qui coopère avec un élément d'encliquetage correspondant de la nervure de fixation.
